# EUROPEAN PATENT SPECIFICATION

(11) **EP 4 530 262 B1**
(45) Date of publication and mention of the grant of the patent: **25.11.2026**
(21) Application number: 23200772.4
(22) Date of filing: 29.09.2023
(51) Int. Cl.: C03B 5/182, C03B 5/185, C03B 5/20, C03B 5/225

(54) **A FINING VESSEL FOR REFINING A GLASS MELT, AND METHOD FOR REFINING A GLASS MELT**
LÄUTERGEFÄSS ZUM LÄUTERN EINER GLASSCHMELZE UND VERFAHREN ZUM LÄUTERN EINER GLASSCHMELZE
RÉCIPIENT D'AFFINAGE POUR L'AFFINAGE D'UN BAIN DE VERRE ET PROCÉDÉ D'AFFINAGE D'UN BAIN DE VERRE

(43) Date of publication of application: 02.04.2025
(73) Proprietor: SCHOTT AG, 55122 Mainz (DE)
(72) Inventor: Schmidbauer, Wolfgang, 55122 Mainz (DE); Eichholz, Rainer Erwin, 95666 Mitterteich (DE); Rasp, Josef, 95666 Mitterteich (DE); Weidmann, Günter, 55122 Mainz (DE); Pfeiffer, Thomas, 55218 Ingelheim (DE)
(74) Representative: Fuchs Patentanwälte Partnerschaft mbB

(56) References cited:
- EP-B1- 0 864 543
- JP-B2- 5 630 265
- US-A- 2 203 269
- US-A- 4 929 266
- US-B2- 8 806 899

## Description

This disclosure relates to a fining vessel for refining a glass melt, and a method for refining a glass melt by means of which an excellent glass quality is achieved.

### Background

The production of glass has a high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, waterpower, or solar panels. The same power sources may also be used to produce hydrogen by electrolysis which then can be used to feed the gas burners. While the latter requires less changes to an existing glass production facility with a gas burner heating, the intermediate step of electrolysis is associated with a considerable energy loss. Hence, a direct use of the electrical power is more desirable.

There are various kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes, and other construction glass products, e.g., glass wool used for insulation, are relatively easy to manufacture in good quality because the glass used for these products has rather low melting temperatures and a steep viscosity-temperature curve. Additionally, quality criteria of these manufactured products are not very stringent. For example, drinking glasses and construction glass products may contain an occasional bubble and solid inclusion, and variations in shape and dimension are tolerable. These glass products may contain impurities to a certain extent because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Naturally, the amount of energy needed for making 200 tons of low melting glass is significantly lower than for a higher melting glass.

The quality required for a given product depends on its intended use. Some high-quality glasses are used to make products that do not entertain the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers. These glasses are often melted in fossil fuel heated vessels where energy is supplied from gas burners in the crown above the glass melt. This technology allows high glass melting temperatures and leads to specialty glass of reasonable quality. The disadvantage of these fossil fuel heated vessels is the huge amount of fossil energy needed for heating purposes. There is an option to melt the glass in fully electric heated vessels with a cold crown, but these vessels do not provide the quality needed in specialty glass applications.

A crucial step in the production of glass products that meet high-quality criteria rests in the fining step. Refining aims at the removal of bubbles from the glass melt by suitably high temperatures, optionally accompanied by stirring of the glass melt. It is generally assisted by refining agents which undergo chemical reactions and force gaseous components, such as e.g., H₂O, HF, HCl, CO₂, SO₂ and O₂ and other compounds with high partial pressure at refining temperature, out of the glass melt. Additionally, design considerations of the fining vessel play an important role to provide for an efficient refining of the glass melt.

CN 107686226 A discloses a melting kiln for borosilicate glass comprises a cold-top melting furnace which is exclusively heated by electric means and a clarifier for, respectively heating and refining a glass melt. A liquid flow hole is provided at the bottom of the cold-top melting furnace, wherein an outlet end of the flow hole communicates with a lower end of a vertically arranged rising channel through which the molten glass passes. The upper end of the rising channel communicates with and feeds the molten glass into an inlet of the clarifier. The upper part of the cold-top melting furnace is provided with a feeding port for supplying borosilicate batch materials. The inner side of the cold-top melting furnace is provided with multiple kiln electrodes for heating by electric means. The interior of the clarifier is provided with a plurality of electrodes and a plurality of gas burners. Optionally, all gas burners may be arranged in the upper part of the clarifier. Optionally, a bubbling device may be disposed on the bottom brick of the clarifier to assist and improve refining the glass melt.

Yet, several drawbacks exist in the prior art with a view on providing for efficient refining that is particularly suited for glass products high-quality glass products.

US 2 203 269 A discloses methods and apparatuses for the production of glass in heated furnaces with the aim of producing a clear, homogeneous glass at high throughput rates with a minimum fuel consumption, while maintaining the certainty of continuous Controlled operation at different drawing speeds required by the different conditions of glassware production.

EP 0 864 543 B1 discloses a process and a glass melting furnace for producing high-temperature melting glasses having vapourisable components by means of oxygen-rich oxidising gases without significant segregation, with high quality and without disturbance.

JP 5 630265 B2 discloses a degassing apparatus for molten glass having a degassing vessel having an introduction port and a discharge port for molten glass. The degassing apparatus comprises a first member (A) and a second member (B) which are arranged in the defoaming tank.

Therefore, it is an object of this disclosure to provide a method for refining a glass melt which is efficient in terms of energy use and in terms of obtaining a glass product with well-defined high-quality criteria. It is an object of this disclosure to provide a fining vessel for refining a glass melt which can be used for said method. It is a further related object of this disclosure to provide a continuous production method for high-quality glass products which has a low carbon footprint.

### Summary of disclosure

In a first aspect according to the invention, this disclosure relates to a method for refining a glass melt, comprising the steps of
- providing a glass melt (302),
- feeding the glass melt into a fining vessel (301), and
- obtaining a refined glass melt,

wherein the fining vessel (301) has a first side wall (303-1), a second side wall (303-2), a bottom (304) and an optional ramp (315), the fining vessel (301) having a middle part (311),
wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), a part above the optional ramp (315) and the optional downstream part (310) are arrangeable or arranged in this consecutive order,
wherein the middle part (311) has a width wₘ, wherein the width wₘ is the shortest distance between the first side wall (303-1) and the second side wall (303-2) at a height of 30 cm above a deepest point of the bottom (304),
wherein the fining vessel (301) comprises a barrier element (313) arranged on the bottom (304), wherein the barrier element (313) extends from the first side wall to the second side wall and has a height h_{w}, wherein the height h_{w} is the vertical distance between the deepest point of the bottom (304) and the highest height of the barrier element (313), wherein h_{w} ≥ 30 cm,
wherein the glass melt (302) in the fining vessel (301) has a working height hₘₑₗₜ of at least 0.35 m, wherein hₘₑₗₜ is at most 0.6 m.

In a second aspect according to the invention, this disclosure relates to a fining vessel (301) for refining a glass melt (302), the fining vessel having a first side wall (303-1), a second side wall (303-2), a bottom (304) and an optional ramp (315), the fining vessel (301) having a middle part (311), wherein the fining vessel (301) is connectable to an optional upstream part (309) for receiving the glass melt (302), and wherein the fining vessel (301) is connectable to an optional downstream part (310) for purging a refined glass (302") melt, wherein the optional upstream part (309), the middle part (311), a part above the optional ramp (315) and the optional downstream part (310) are arrangeable or arranged in this consecutive order, wherein the middle part (311) has a width wₘ, wherein the width wₘ is the shortest distance between the first side wall (303-1) and the second side wall (303-2) at a height of 30 cm above a deepest point of the bottom (304), wherein the fining vessel (301) comprises a barrier element (313) arranged on the bottom (304), wherein the barrier element (313) extends from the first side wall to the second side wall and has a height h_{w}, wherein the height h_{w} is the vertical distance between the deepest point of the bottom (304) and the highest height of the barrier element (313), wherein h_{w} ≥ 30 cm.

The fining vessel (301) according to this disclosure provides for a so-called flat-bed refining method. The method is thus run under the constraint that the glass melt (302) in the fining vessel (301) has a working height hₘₑₗₜ of at least 0.35 m, wherein hₘₑₗₜ is at most 0.6 m, for fining to take place. The fining vessel (301) is designed and operated in such a way that fining takes place mainly, or even entirely, in the middle part (311). The fining vessel (301) according to this disclosure is designed in such a way to allow small bubbles to form and to leave the glass melt.

In a third aspect, a fining vessel (301) is described for refining a glass melt (302), the fining vessel having a first side wall (303-1), a second side wall (303-2), a bottom (304) and an optional ramp (315), the fining vessel (301) having a middle part (311), wherein the fining vessel (301) is connectable to an optional upstream part (309) for receiving the glass melt (302'), and wherein the fining vessel (301) is connectable to an optional downstream part (310) for purging a refined glass melt (302"), wherein the optional upstream part (309), the middle part (311), a part above the optional ramp (315) and the optional downstream part (310) are arrangeable or arranged in this consecutive order, wherein the middle part (311) has a width wₘ, wherein the width wₘ is the shortest distance between the first side wall (303-1) and the second side wall (303-2) at a height of 30 cm above a deepest point of the bottom (304), wherein the fining vessel (301) comprises a barrier element (313) arranged on the bottom (304), wherein the barrier element (313) extends from the first side wall to the second side wall, wherein the barrier element (313) is arranged in a section of the middle part (311) which belongs to a region between 0.8 and 1.0 lₘ along the length lₘ of the middle part (311), or wherein the barrier element (313) is arranged in a section of the middle part (311) which belongs to a region between 0.0 and 0.2 lₘ along the length lₘ of the middle part (311).

In a fourth aspect, a fining vessel (301) is described for refining a glass melt (302), the fining vessel having a first side wall (303-1), a second side wall (303-2), a bottom (304) and a ramp (315), the fining vessel (301) having a middle part (311), wherein the fining vessel (301) is connectable to an optional upstream part (309) for receiving the glass melt (302'), and wherein the fining vessel (301) is connectable to an optional downstream part (310) for purging a refined glass melt (302"), wherein the optional upstream part (309), the middle part (311), a part above the optional ramp (315) and the optional downstream part (310) are arrangeable or arranged in this consecutive order, wherein the middle part (311) has a width wₘ, wherein the width wₘ is the shortest distance between the first side wall (303-1) and the second side wall (303-2) at a height of 30 cm above a deepest point of the bottom (304), wherein the ramp (315) has a height hᵣ of 0.1 to 1.0 m with respect to the highest point of the ramp (315) and the lowest point of the ramp (315).

In a related aspect, an apparatus comprising a fining vessel (301) is described and a riser duct (308), wherein the riser duct (308) is arrangeable or arranged upstream of the fining vessel (301).

The riser duct (308) allows feeding a glass melt into the fining vessel (301), which has been previously generated in a melting vessel. The riser duct (308) thus serves as a transport system between the melting vessel and fining vessel (301) and allows heating the glass melt to an appropriate temperature. Advantageously, the glass melt may be heated to a temperature of at least T2 which corresponds to a viscosity of the glass melt (302) of 10² dPa·s which establishes fining conditions. When run at these conditions, large bubbles with a diameter of more than 500 µm may readily escape the glass melt via the glass melt surface and while they are still in the section of the riser duct. Smaller bubbles with a diameter of 500 µm or less require the fining vessel (301) to leave the glass melt via the surface and to thus achieve sufficient fining with a view to providing high-quality glass products.

In a related aspect, an apparatus comprising a fining vessel (301) is described and a riser duct (308) and/or a vertical duct (312), wherein the riser duct (308) is arrangeable or arranged upstream of the fining vessel (301) and/or wherein the vertical duct (312) is arrangeable or arranged downstream of the fining vessel (301).

### Brief Description of the Figures

**Figure 1** shows a longitudinal section of an apparatus according to this disclosure comprising a fining vessel (301) with a middle part (311), a riser duct (308) with an upstream part (309) and a vertical duct (312) with a downstream part (310)
**Figure 2** shows a longitudinal section of an apparatus comprising a fining vessel (301) with a middle part (311), a riser duct (308) with an upstream part (309) and a vertical duct (312) with a downstream part (310).
**Figure 3** shows a longitudinal section of an apparatus comprising a fining vessel (301) with a middle part (311), a riser duct (308) with an upstream part (309) and a vertical duct (312) with a downstream part (310).
**Figure 4** shows a longitudinal section of an apparatus comprising a fining vessel (301) with a middle part (311), a riser duct (308) with an upstream part (309) and a vertical duct (312) with a downstream part (310).
**Figure 5** shows a top view of an apparatus according to this disclosure comprising a fining vessel (301) with a middle part, an upstream part (309) and a downstream part (310).

### Detailed description

The detailed description relates to the aspects described in the summary of disclosure. Any of the following embodiments may relate to both the fining vessel and the method.

### Definitions and standards

A "glass melt" is a volume of a batch of glass materials that has a viscosity of less than 10^{7.6} dPas. Such a viscosity can be measured using the fiber elongation method, e.g. as described in DIN ISO 7884-6:1998-02, where the elongation speed of a fiber with a defined diameter is determined with different weights at different temperatures.

The temperature at which the glass melt has a viscosity of 10² dPas is herein called "temperature T2". Similarly, the temperature at which the glass melt has a viscosity of 10⁴ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below. $Ig \left(η/dPas\right) = A + \frac{B}{\left(t-{t}_{0}\right)}$

In the VFT equation, t is the temperature under consideration. A, B and t₀ are the so-called VFT constants that are specific for each glass composition.

The middle part (311) refers to a fictitious volume within the fining vessel (301), wherein the fictitious volume is characterised by a length lₘ, a height hₘ, and a width wₘ. The middle part (311) of the fining vessel has a height hₘ which is at most 0.63 m with respect to the deepest point of the bottom (304). The middle part (311) has a width wₘ, wherein the width wₘ is the shortest distance between the first side wall (303-1) and the second side wall (303-2) at a height of 30 cm above a deepest point of the bottom (304). Depending on the shape of the fining vessel, the width may vary at different heights. The middle part of the fining vessel has a length lₘ which extends in horizontal and orthogonal direction with respect to the width wₘ, wherein the length lₘ extends from the upstream part (309) to the downstream part (310), not including the upstream part (309) and the downstream part (310). The length lₘ shall thus be understood as the shortest distance measured from the geometrical interface of the upstream part and the middle part until the downstream part begins.

"Dwell time" is the time that a given portion of the glass melt spends in a part of the apparatus, e.g., the middle part of the fining vessel before being withdrawn from the middle part. Dwell time can be measured using so-called tracers, i.e., components that are added to the glass melt so that they can be detected in the product, allowing conclusions as to the time spent in the fining vessel. Examples of tracer elements are Ca, Sr and Y. The "average dwell time" is defined as: $\frac{middle part volume \left[{m}^{3}\right]}{middle part throughput \left[\frac{{m}^{3}}{h}\right]}$

The "middle part volume" is the volume of the glass melt which is required to fill the middle part until a certain working height hₘₑₗₜ. The working height of the glass melt, indicated by the triangle pointing on a horizontal line, shall be determined in relation to the deepest point of the bottom (304). The "middle part volume" thus excludes the volume of the barrier element (313) which is not accessible to the glass melt. In case a ramp is present, the "middle part volume" is the volume of the glass melt which is required to fill the middle part until a certain working height hₘₑₗₜ as if the ramp was not present.

Whereas the "average dwell time" describes the time average which the glass melt takes to pass through a part of an apparatus, the "minimum dwell time" describes the shortest time that an individualized portion of the glass melt passes through a certain part of the apparatus. The "minimum dwell time" can also be measured using so-called tracers, for example by adding tracers to the batch of raw materials when fed into the melting vessel and by measuring the time it takes to detect said tracers at the downstream end of the melting vessel.

Analogously, the "minimum dwell time" of the glass melt in the middle part of the fining vessel can be measured by adding tracers to the glass melt in the upstream part and measuring the time it takes to detect said tracers in the downstream part.

If this disclosure refers to a length of any element, a width of any element or a height of any element, it shall be understood that with reference to a Cartesian coordinate system, length always refers to a maximal extension in the x-direction, width always refers to a maximal extension in the y-direction, and height always refers to a maximal extension in the z-direction, wherein the x-direction, y-direction and z-direction are oriented pairwise perpendicular to each other.

The fining vessel according to this disclosure has a first side wall (303-1), a second side wall (303-2), and a bottom (304), all of which form geometrical planes which may be curved or flat.

In this disclosure, glass throughput refers to an amount of glass, for example given in tons or cubic meters, processed through a middle part volume or an area per time, for example given in days. Accordingly, a ratio between the glass throughput and an area may be expressed in tons per day per square meter, i.e., t/(d·m²). Accordingly, a ratio between the glass throughput in m³/d and a middle part volume may be expressed in 'per day' or 'day to the power of minus one', i.e., d⁻¹.

The glass melt (302) has a fictitious top layer (318) and a fictitious bottom layer (319). The fictitious top layer (318) consists of the portion of the glass melt (302) in the middle part volume which extends from the surface of the glass melt (307) into the glass melt (302) with a thickness of 10 cm. The fictitious bottom layer (319) consists of the portion of the glass melt (302) in the middle part volume which extends from the bottom (304) into the glass melt (302) with a thickness of 10 cm. As defined before, the middle part volume is the volume of the glass melt (302) which is required to fill the middle part (311) up to the working height hₘₑₗₜ.

The average temperature of the glass melt in the fictitious top layer (318) refers to the arithmetic mean of the temperature readings using two or more top temperature probes (320) located at the same horizontal positions as the mid-height of the fictitious top layer (318), viewed in a side view of the fining vessel (301). The average temperature of the glass melt in the fictitious bottom layer (319) refers to the arithmetic mean of the temperature readings using two or more bottom temperature probes (321) located at the same horizontal positions as the mid-height of the fictitious bottom layer (319), viewed in a side view of the fining vessel (301). The two or more top temperature probes (320) and the two or more bottom temperature probes (321) are arranged in a section of the middle part (311) which belongs to a region between 0.4 and 0.6 lₘ (e.g. at 0.5 lₘ) along the length lₘ of the middle part (311). The two or more top temperature probes (320), and the two or more bottom temperature probes (321), may be attached to the wall or the bottom of the fining vessel and are arranged in such a way that the actual temperature measurement happens at least **5 cm** away from the wall and/or the bottom. In other words, the actual temperature measurement happens within the glass melt.

The average temperature of the glass melt refers to the arithmetic mean of the temperature readings using two or more top temperature probes (320) located at the same horizontal positions, viewed in a side view of the fining vessel (301).

Within this disclosure, the gas bubbles generated as a result of the fining process are assumed to be spherical and are thus geometrically defined in terms of the equivalent spherical diameter. The terminology 'diameter' in relation to the gas bubble size shall thus be understood as the equivalent spherical diameter.

### Embodiments

The fining vessel (301) according to this disclosure provides for flat-bed refining and may be advantageously used in a method according to this disclosure. Features described in the context of the fining vessel (301) are thus applicable to the method according to this disclosure as far as they concern the fining vessel (301).

The fining vessel may have an optional ramp (315) which is intended to let the glass melt flow downwards after fining of said glass melt. The fining vessel (301) has a middle part (311), where fining shall take place, i.e., the temperature of the glass melt in said middle part needs to be raised to a temperature which is sufficient to let fining take place as part of the method. The fining vessel (301) is connectable to an optional upstream part (309) for receiving the glass melt (302'). The fining vessel (301) is also connectable to an optional downstream part (310), i.e., a vertical duct (312), for purging a refined glass melt. It shall be understood that fining essentially takes place in the middle part (311) of the fining vessel, and, if present, possibly also in the part above the ramp.

The optional upstream part (309), the middle part (311), a part above the optional ramp (315) and the optional downstream part (310) are arrangeable or arranged in this consecutive order. Likewise, if all optional parts are present, the upstream part (309), the middle part (311), a part above the ramp (315) and the downstream part (310) are arranged in this consecutive order. That means during the method, a glass melt will always be fed from the upstream part and proceed through the middle part, subsequently above the ramp, and finally via the downstream part.

The middle part (311) has a width wₘ, which is the shortest distance between the first side wall (303-1) and the second side wall (303-2) at a height of 30 cm above a deepest point of the bottom (304). As the bottom may be curved, there may be two or more 'deepest points'. Then, the width wₘ needs to be established for all of said two or more 'deepest points' at a height of 30 cm, and the shortest distance between the first side wall (303-1) and the second side wall (303-2) needs to be established out of all of said 'deepest points'.

The middle part (311) may comprise a barrier element (313) which is arranged on the bottom (304). The barrier element (313) extends from the first side wall to the second side wall such that it provides a barrier to a glass flow. The barrier element (313) thus covers a lower portion of a cross-section of the middle part (311). The barrier element may have a variable height between the first side wall and the second side wall. The barrier element has a characteristic height h_{w} which is the vertical distance between the deepest point of the bottom (304) and the highest height of the barrier element (313), with the proviso that h_{w} ≥ 30 cm.

The fining vessel according to this disclosure provides for so-called flat-bed refining.

The middle part (311) of the fining vessel may have a height hₘ which is at most 0.63 m. The height hₘ is the vertical distance between a deepest point of the bottom (304) and the lowest height of the first side wall (303-1) or the second side wall (303-2). By virtue of said constraints the middle part (311) cannot be filled with a glass melt which is deeper than 0.60 m in a height direction because it would lead to an overflow of the glass melt over the first side wall (303-1) or the second side wall (303-2).

The middle part of the fining vessel has a length lₘ which extends in horizontal and orthogonal direction with respect to the width wₘ, wherein the length lₘ extends from the upstream part to the downstream part, not including the upstream part and the downstream part. The length lₘ shall thus be understood as the shortest distance measured from the geometrical interface of the upstream part and the middle part until the downstream part begins.

The barrier element (313) may be arranged in a section of the middle part (311) which belongs to a region between 0.8 and 1.0 lₘ along the length lₘ of the middle part (311). Alternatively, the barrier element (313) may be arranged in a section of the middle part (311) which belongs to a region between 0.0 and 0.2 lₘ along the length lₘ of the middle part (311). The position of 0.0 lₘ shall be understood as the geometrical interface of the upstream part to the middle part. The position of 1.0 lₘ shall be understood as the geometrical interface of the middle part and the downstream part. In case the ramp is present, the position of 1.0 lₘ shall be understood as the geometrical interface of the middle part and the downstream part, with a second interface between the ramp and the downstream part.

The fining vessel (301) may comprise a ramp (315), the ramp having a height hᵣ of 0.1 to 1.0 m with respect to the highest point of the ramp and the lowest point of the ramp. The ramp is arranged in downstream direction after the middle part and allows the refined glass melt to flow downwards. The ramp may either be shaped as a curved plane or as a flat plane. In the case of a flat plane, the ramp may have a constant slope.

The fining vessel (301) may have a superstructure (305) which covers the fining vessel. It shall be understood that the superstructure makes at least partial physical contact with both the upper edge of the first side wall (303-1) and the upper edge of the second side wall (303-2). It is preferred that the superstructure makes full or continuous physical contact with both the upper edge of the first side wall (303-1) and the upper edge of the second side wall (303-2) to thus provide a complete cover above the middle part and, if present, the ramp. The temperature of the inner volume of the superstructure may be controlled with a temperature probe (322). It shall be understood that the temperature probe (322) thus monitors the temperature of the inner volume of the superstructure and also allows adjusting the temperature of the inner volume of the superstructure.

The working height hₘₑₗₜ is the filling of the middle part with a glass melt in a height direction. According to this disclosure, the working height hₘₑₗₜ is at least 0.35 m to provide for a reasonable amount of glass melt which is subjected to fining in the middle part. Related herewith the barrier element (313) has a height h_{w} of at least 0.30 m, with the proviso that hₘₑₗₜ ≥ 1.2 × h_{w}, in order to guarantee that a sufficient amount of glass melt is provided which can pass and flow over the barrier element.

The fining vessel (301) may comprise one or more heating burners (314) arranged above the bottom (304) at a height of at least 0.9 m, or at least 1.5 m, above the deepest point of the bottom (304). It shall be understood that the one or more heating burners allow heating the glass melt to a temperature which is sufficient for fining under the constraint that the one or more heating burners do not touch or get in physical contact with the glass melt.

The glass melt (302) may be heated by means of electrodes which are placed in such a way that they are in direct physical contact with the glass melt and by means of one or more heating burners (314) arranged above the glass melt. The one or more heating burners may provide more thermal energy to the glass melt than the electrodes which leads to glass melt layers of different temperature. The glass melt (302) may have a fictitious top layer (318) at melt level, i.e., directly below the surface (307), and a fictitious bottom layer (319) above bottom (304).

Each of the fictitious top layer (318) and the fictitious bottom layer (319) may have a thickness extension of, e.g., 10 cm in height. An average temperature of the glass melt in the fictitious top layer (318) may be at least 10 K higher than an average temperature of the glass melt in the fictitious bottom layer (319).

### Method for refining a glass melt

In one aspect, this disclosure relates to a method for refining a glass melt, comprising the steps of
- providing a glass melt (302),
- feeding the glass melt into a fining vessel (301), and
- obtaining a refined glass melt,

wherein the fining vessel (301) has a first side wall (303-1), a second side wall (303-2), a bottom (304) and an optional ramp (315), the fining vessel (301) having a middle part (311),
wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), a part above the optional ramp (315) and the optional downstream part (310) are arrangeable or arranged in this consecutive order,
wherein the middle part (311) has a width wₘ, wherein the width wₘ is the shortest distance between the first side wall (303-1) and the second side wall (303-2) at a height of 30 cm above a deepest point of the bottom (304),
wherein the fining vessel (301) comprises a barrier element (313) arranged on the bottom (304), wherein the barrier element (313) extends from the first side wall to the second side wall and has a height h_{w}, wherein the height h_{w} is the vertical distance between the deepest point of the bottom (304) and the highest height of the barrier element (313), wherein h_{w} ≥ 30 cm,
wherein the glass melt (302) in the fining vessel (301) has a working height hₘₑₗₜ of at least 0.35 m, wherein hₘₑₗₜ is at most 0.6 m.

In one embodiment, the step 'providing a glass melt (302)' comprises prior heating of the glass melt (302) to a temperature of at least T2 which corresponds to a viscosity of the glass melt (302) of 10² dPa·s. Said prior heating thus establishes fining conditions.

In one embodiment, the step 'feeding the glass melt into a fining vessel (301)' is realized via a riser duct as the upstream part (309). Said means allows a continuous filling of the glass melt into the fining vessel (301) and maintaining a desirable glass melt level which thus enables flat-bed refining. The riser duct and the fining vessel act as communicating sections, wherein the flow conditions of the glass melt in the riser duct directly influence and control the flow conditions of the glass melt in the fining vessel.

In one embodiment, the method comprises the step of heating the glass melt by means of a heating burner (314) arranged within a gaseous phase (306), wherein the heating burner (314) can optionally be heated with fuel gas and oxygen, or fuel gas and air, or a mixture of hydrogen and oxygen, or with natural gas and oxygen, or with a mixture of natural gas, hydrogen and oxygen, or ammonia and oxygen, or biomethane, or biofuel. In one embodiment, the heating burner (314) can be heated with a mixture of hydrogen and air, or with natural gas and air, or with a blend of natural gas and hydrogen with air. In a further embodiment, the heating burner (314) may be heated with a combustion mixture which is free of fossil fuel. The terminology "free of fossil fuel" means that the combustion mixture comprises less 1.0 wt.% of fossil fuel, or less than 0.1 wt.% of fossil fuel.

In one embodiment, the method comprises the step of heating the glass melt (302) by means of two or more heating circuits (316) each comprising at least one pair of electrodes (317), wherein one or more or all electrodes are rod-shaped, plate-shaped, block-shaped and/or tube-shaped. In a related embodiment, the electrodes are arranged in a vertical or a horizontal or an oblique orientation in or on the side walls (303) or arranged in a horizontal or a vertical or an oblique orientation in or on the bottom (304).

In one embodiment, the electrodes comprise a platinum-rhodium alloy. In one embodiment, the electrodes comprise a molybdenum-tungsten alloy. In one embodiment, the electrodes comprise molybdenum and ZrO₂ dispersed therein. Advantageously, the electrode material is chosen such that corrosion at the high process temperatures is kept to a minimum.

In one embodiment, the method comprises the step of cooling the first side wall (303-1), the second side wall (303-2) and/or the bottom (304). In one embodiment, the method comprises the step of cooling the barrier element (313). In one embodiment, the method comprises the step of cooling the first side wall (303-1), the second side wall (303-2), the bottom (304) and the barrier element (313). Said measure avoids corrosion of the refractory materials comprised in the walls and/or the barrier element. In one embodiment cooling the first side wall (303-1), the second side wall (303-2) and/or the bottom (304) is realized by water cooling and/or air cooling. Air cooling is more advantageous because it allows a better balance between the need for cooling to minimize corrosion while retaining sufficiently high temperatures which are a requirement for the fining process.

In one embodiment cooling the barrier element (313) is realized by water cooling and/or air cooling, wherein the barrier element (313) optionally comprises or consists of platinum, molybdenum or iridium or alloys thereof. In one embodiment cooling the barrier element (313) is realized by water cooling and/or air cooling, wherein the barrier element (313) comprises a ceramic material which may optionally be covered or shielded with platinum, molybdenum or iridium or alloys thereof. In the absence of cooling, the barrier element (313) advantageously comprises a ceramic material which may be covered or shielded with platinum, molybdenum or iridium or alloys thereof to minimize corrosion. In an embodiment of the method which employs cooling of the barrier element (313), e.g., by water cooling and/or air cooling, the barrier element (313) may comprise or consist of a ceramic material which provides sufficient protection against corrosion during the lifetime of the fining vessel.

In one embodiment of the method, one or more of the following conditions apply:
- hₘₑₗₜ > h_{w} + 0.05 m, or hₘₑₗₜ > h_{w} + 0.10 m, or hₘₑₗₜ > h_{w} + 0.15 m,
- the glass melt (302) has a minimum dwell time of at least 2.5 hours, or at least 3.0 hours, or at least 3.5 hours in the middle part (311),
- the glass melt (302) has an average dwell time of at least 6.0 hours, or at least 8.0 hours, or at least 10.0 hours in the middle part (311),
- a ratio between a glass throughput and an area A in the middle part (311) is at least 1.5 t/(d·m²), or at least 2.0 t/(d·m²), or at least 2.3 t/(d·m²), or at least 2.6 t/(d·m²), wherein A = lₘ × wₘ,
- a ratio between a glass throughput and a middle part volume V in the middle part (311) is at least 1.0 d⁻¹, or at least 2.0 d⁻¹, or at least 4.0 d⁻¹.

In one embodiment of the method, the working height hₘₑₗₜ of the glass melt (302) and the height h_{w} of the barrier element (313) are related by hₘₑₗₜ > h_{w} + 0.05 m, or hₘₑₗₜ > h_{w} + 0.10 m, or hₘₑₗₜ > h_{w} + 0.15 m. In view of the working height hₘₑₗₜ of the glass melt (302) which is at most 0.6 m, it is advantageous to adjust the height h_{w} of the barrier element (313) in such a way that it provides a hindrance for the glass melt which benefits fining because above the barrier element the glass melt becomes thinner so that gas bubbles are forced to leave the glass melt.

In one embodiment of the method, the glass melt (302) has a minimum dwell time of at least 2.5 hours, or at least 3.0 hours, or at least 3.5 hours in the middle part (311). In one embodiment of the method, the glass melt (302) has a minimum dwell time of 2.5 to 10.0 hours, or 3.0 to 9.0 hours, or 3.5 to 8.0 hours in the middle part (311). In one embodiment of the method, the glass melt (302) has a minimum dwell time of 10.0 hours or less, or 9.0 hours or less, or 8.0 hours or less in the middle part (311).

In one embodiment of the method, the glass melt (302) has an average dwell time of at least 6.0 hours, or at least 8.0 hours, or at least 10.0 hours in the middle part (311). In one embodiment of the method, the glass melt (302) has an average dwell time of 6.0 to 25.0 hours, or 8.0 to 20.0 hours, or 10.0 to 15.0 hours in the middle part (311). In one embodiment of the method, the glass melt (302) has an average dwell time of 25.0 hours or less, or 20.0 hours or less, or 15.0 hours or less in the middle part (311).

In one embodiment of the method, a ratio between a glass throughput and an area A in the middle part (311) is at least 1.5 t/(d·m²), or at least 2.0 t/(d·m²), or at least 2.3 t/(d·m²), or at least 2.6 t/(d·m²), wherein A = lₘ × wₘ. In one embodiment, a ratio between a glass throughput and an area A in the middle part (311) is 1.5 to 5.0 t/(d·m²), or 2.0 to 5.0 t/(d·m²), or 2.3 to 4.5 t/(d·m²), or 2.6 to 4.0 t/(d·m²). In one embodiment, a ratio between a glass throughput and an area A in the middle part (311) is 5.0 t/(d·m²) or less, or 4.5 t/(d·m²) or less, or 4.0 t/(d·m²) or less.

In one embodiment of the method, a ratio between a glass throughput and a middle part volume V in the middle part (311) is at least 1.0 d⁻¹, or at least 2.0 d⁻¹, or at least 4.0 d⁻¹. In one embodiment, a ratio between a glass throughput and a middle part volume V in the middle part (311) is 1.0 to 10.0 d⁻¹, or 2.0 to 9.0 d⁻¹, or 4.0 to 8.0 d⁻¹. In one embodiment, a ratio between a glass throughput and a middle part volume V in the middle part (311) is 10.0 d⁻¹ or less, or 9.0 d⁻¹ or less, or 8.0 d⁻¹ or less.

In one embodiment of the method, the glass melt (302) in the middle part (311) is heated at least partially to a temperature of at least T2 which corresponds to a viscosity of the glass melt (302) of 10² dPa·s. It is generally accepted that fining may be carried out at a temperature of T2 which is sufficient to drive out emanating bubbles from the glass melt and to thus achieve efficient fining. Higher temperatures than T2 are typically not required for fining. The skilled person knows which fining agent or agents to choose based on the glass characteristics, specifically the characteristic T2 temperature. At a temperature of T2 a glass melt is generally considered to be fluid enough so that emanating gas bubbles can leave the glass melt in relation to the dwell time described in this disclosure.

In one embodiment of the method, at least 60%, or at least 70%, or at least 80% of a volume of the glass melt (302) in the middle part (311) is maintained at and/or heated to a temperature of at least T2. As described within this disclosure, the glass melt (302) in the middle part (311) may be heated by different means, i.e., a heating burner (314) within a gaseous phase (306), and/or two or more heating circuits (316) within the glass melt (302). The two or more heating circuits (316) within the glass melt (302) allow for uniform heating of the glass melt. By way of the heating burner (314) arranged within the gaseous phase (306), a temperature gradient may be established which drops from a fictitious top layer (318) to a fictitious bottom layer (319).

The inventors have established that excellent fining can be achieved, provided that at least 60% of a volume of the glass melt (302) in the middle part (311) is heated to a temperature of at least T2

In one embodiment of the method, the glass melt (302) has a fictitious top layer (318) and a fictitious bottom layer (319), wherein the fictitious top layer (318) consists of a portion of the glass melt (302) in a middle part volume which extends from a surface of the glass melt (307) into the glass melt (302) with a thickness of 10 cm, wherein the fictitious bottom layer (319) consists of a portion of the glass melt (302) in a middle part volume which extends from the bottom (304) into the glass melt (302) with a thickness of 10 cm, wherein the middle part volume is the volume of the glass melt (302) which is required to fill the middle part (311) up to the working height hₘₑₗₜ, wherein an average temperature of the glass melt in the fictitious top layer (318) is at least 10 K higher, or at least 30 K higher, or at least 50 K higher, than an average temperature of the glass melt in the fictitious bottom layer (319). Without wishing to be bound to theory, establishing a temperature gradient between the fictitious bottom layer (319) and the fictitious top layer (318) is believed to assist and benefit the fining process because the tendency that gas bubbles are driven out of the glass melt is enhanced in the fictitious top layer (318), where temperatures are higher.

In one embodiment, the two or more top temperature probes (320) are arranged in a cross-sectional plane of the middle part (311) at a position of 0.5 lₘ along the length lₘ of the middle part (311), wherein the two or more top temperature probes (320) are located at the same horizontal positions, viewed in a side view of the fining vessel (301), wherein the two or more top temperature probes (320) are located 5 cm below the surface of the glass melt (307), wherein a first top temperature probe (320) is located 5 cm away from the first side wall (303-1), wherein a second top temperature probe (320) is located 5 cm away from the second side wall (303-2).

In one embodiment, the two or more bottom temperature probes (321) are arranged in a cross-sectional plane of the middle part (311) at a position of 0.5 lₘ along the length lₘ of the middle part (311), wherein the two or more bottom temperature probes (321) are located at the same horizontal positions, viewed in a side view of the fining vessel (301), wherein the two or more bottom temperature probes (321) are located 5 cm above the bottom (304), wherein a first bottom temperature probe (321) is located 5 cm away from the first side wall (303-1), wherein a second bottom temperature probe (321) is located 5 cm away from the second side wall (303-2).

The average temperature of the glass melt in the fictitious top layer (318) may be measured and averaged using two or more top temperature probes (320) located at the same horizontal positions as the mid-height of the fictitious top layer (318), viewed in a side view of the fining vessel (301), and the average temperature of the glass melt in the fictitious bottom layer (319) is measured and averaged using two or more bottom temperature probes (321) located at the same horizontal positions as the mid-height of the fictitious bottom layer (319), viewed in a side view of the fining vessel (301), wherein the two or more top temperature probes (320) and the two or more bottom temperature probes (321) are arranged in a section of the middle part (311) which belongs to a region between 0.4 and 0.6 lₘ along the length lₘ of the middle part (311).

In one embodiment of the method, an average temperature of the glass melt in the fictitious top layer (318) is 10 to 60 K, or 30 to 60 K, or 50 to 60 K, higher than an average temperature of the glass melt in the fictitious bottom layer (319).

In one embodiment of the method, heating the glass melt by means of a heating burner (314) relies exclusively, i.e., to more than 99% (v/v) relative to the total volume of hydrogen and oxygen, on hydrogen and oxygen generated through the electrolysis of H₂O. Electrolysis powered through renewable energy inherently provides for a reduction of the environmental burden and a reduction of the carbon dioxide footprint associated with methods of making a refined glass melt. Alternatively, electrolysis can be powered through nuclear energy which provides for a CO₂-neutral production of hydrogen. However, because of the radioactive waste this energy source is not sustainable.

In one embodiment of the method, the carbon dioxide footprint of the refined glass melt (302") is less than 500 g CO₂ per kg of glass. In another embodiment, the carbon dioxide footprint of the refined glass melt (302") is less than 400 g, less than 300 g, less than 200 g, less than 100 g or even 0 g of CO₂ per kg of glass. For example, a refined glass melt (302") having a carbon dioxide footprint of zero can be made using energy from renewable sources only, e.g. biofuel, hydrogen, or electricity from renewable sources. The carbon dioxide footprint refers to the CO₂ emissions resulting from scope 1 emissions according to the GHG protocol. In this context, this refers to the amount of CO₂ emission caused by burning fossil fuels and released by carbon containing raw materials during manufacturing of the refined glass melt (302") per kg of glass material.

### Fining vessel

This disclosure relates to a fining vessel (301) for refining a glass melt (302), the fining vessel having a first side wall (303-1), a second side wall (303-2), a bottom (304) and an optional ramp (315), the fining vessel (301) having a middle part (311), wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), a part above the optional ramp (315) and the optional downstream part (310) are arranged in this consecutive order, wherein the middle part (311) has a width wₘ, wherein the width wₘ is the shortest distance between the first side wall (303-1) and the second side wall (303-2) at a height of 30 cm above a deepest point of the bottom (304), wherein the fining vessel (301) comprises a barrier element (313) arranged on the bottom (304), wherein the barrier element (313) extends from the first side wall to the second side wall and has a height h_{w}, wherein the height h_{w} is the vertical distance between the deepest point of the bottom (304) and the highest height of the barrier element (313), wherein h_{w} ≥ 30 cm.

The fining vessel (301) may be integrated into an apparatus which is suited to provide a glass melt from a batch of raw materials, transferring the glass melt through a riser duct (308) into the fining vessel (301) and purging the refined glass melt into a vertical duct (312) with downward flow. The fining vessel (301) receives the glass melt (302, 302') from an upstream part (309), where the glass melt may be heated to a refining temperature of at least T2 such that refining is initiated. In the middle part (311) of the fining vessel (301) fining of the glass melt takes place. The refined glass melt (302, 302") may be purged into a downstream part (310) for resorption of bubbles with a diameter of 50 µm or less. The middle part (311) may thus be arranged between an optional upstream part (309) and an optional downstream part (310).

A gaseous phase (306) is provided above a surface (307) of the glass melt (302) in the middle part (311) which optionally is in fluid communication with a gaseous phase (306') above a surface (307) of a glass melt (302') of the upper section of the riser duct (308).

The walls of the fining vessel, i.e., the first side wall (303-1), the second side wall (303-2), and the bottom (304), also the optional upstream part and the optional downstream part, may be made of a variety of refractory materials. In an embodiment, the bottom (304) and/or the first side wall (303-1) and the second side wall (303-2) comprise or consist of a refractory material, such as a ceramic material. In one embodiment, the bottom (304) and/or the first side wall (303-1) and the second side wall (303-2) comprise a ceramic material.

In one embodiment, the barrier element (313) comprises or consist of a ceramic material. In one embodiment, the barrier element (313) may comprise or consist of platinum, molybdenum or iridium or alloys thereof or comprise a ceramic material which may be covered or shielded with platinum, molybdenum or iridium or alloys thereof.

In embodiments, the refractory material may be an oxidic ceramic, i.e., a material comprising or consisting of one or more oxides, such as metal oxides. Optionally, the refractory material may be temperature resistant up to at least 1400 °C, or at least 1600 °C, or even at least 1700 °C. "Temperature resistant" means in this disclosure that the refractory material has a melting point or melting range above the indicated temperature. In embodiments, the refractory material may be selected from ZrO₂, Al₂O₃, SiO₂, and combinations thereof. Optionally, the refractory material may be cooled by air or water to avoid corrosion.

In one embodiment, the height hᵥ of the fining vessel is from 0.1 to 3.0 m, or 0.2 to 2.75 m, or 0.3 to 2.5 m, or 0.4 to 2.0 m, or 0.5 to 1.5 m, or 0.6 to 1.0 m. In one embodiment, the height hᵥ of the fining vessel is 0.1 m or more, or 0.2 m or more, or 0.3 m or more, or 0.4 m or more, or 0.5 m or more, or 0.6 m or more, or 0.7 m or more, or 0.8 m or more. In one embodiment, the height hᵥ of the fining vessel is 3.0 m or less, or 2.75 m or less, or 2.5 m or less, or 2.0 m or less, or 1.5 m or less. The height hᵥ of the fining vessel is the vertical distance between the deepest point of the bottom (304) and the highest point below the superstructure (305).

The middle part (311) of the fining vessel where fining takes place has a height hₘ, wherein hₘ is at most 0.63 m, wherein the height hₘ is the vertical distance between a deepest point of the bottom (304) and the lowest height of the first side wall (303-1) or the second side wall (303-2). The working height hₘₑₗₜ of the glass melt (302) is at most 0.6 m and must not be exceeded as part of the method according to this disclosure, to not overfill the middle part (311) in view of its height hₘ.

In one embodiment, the middle part (311) has a length lₘ of 0.5 to 6.8 m, or 0.75 to 5.8 m, or 1.0 to 4.8 m, or 2.0 to 3.8 m. In one embodiment, the length lₘ is 0.5 m or more, or 0.75 m or more, or 1.0 m or more, or 2.0 m or more. In one embodiment, the length lₘ is 6.8 m or less, or 5.8 m or less, or 4.8 m or less, or 3.8 m or less.

In one embodiment, the middle part (311) has a width wₘ of 0.2 to 4.0 m, or 0.2 to 3.5 m, or 0.3 to 3.0 m, or 0.4 to 2.0 m, or 0.5 to 1.5 m, or 0.6 to 1.0 m. In one embodiment, the width wₘ is 0.2 m or more, or 0.3 m or more, or 0.4 m or more, or 0.5 m or more, or 0.6 m or more. In one embodiment, the width wₘ is 4.0 m or less, or 3.5 m or less, or 3.0 m or less, or 2.5 m or less, or 2.0 m or less, or 1.5 m or less, or 1.0 m or less.

The fining vessel (301) comprises a barrier element (313) arranged on the bottom (304), wherein the barrier element (313) has a length l_{w}, a width w_{w} and a height h_{w}, wherein lₘ ≥ 10 × l_{w}, wherein wₘ = w_{w}, and h_{w} × w_{w} ≥ 0.75 × hₘ × wₘ, or h_{w} × w_{w} ≥ 0.85 × hₘ × wₘ, or h_{w} × w_{w} ≥ 0.95 × hₘ × wₘ. The barrier element (313) is arranged on the bottom (304) and has the same width as the middle part and a certain minimum but variable height. By virtue of said features - h_{w} × w_{w} ≥ 0.75 × hₘ × wₘ, or h_{w} × w_{w} ≥ 0.85 × hₘ × wₘ, or h_{w} × w_{w} ≥ 0.95 × hₘ × wₘ - the barrier element (313) has a cross-section of 75% or more, or 85% or more, or 95% or more, with respect to the cross-section of the middle part before or after said barrier element (313). It has been surprisingly found that the presence of the barrier element has a beneficial effect on the fining of the glass melt because it creates a hindrance within the middle part of the fining vessel and thereby prevents and/or minimizes turbulent flows or backflows within the glass melt to be refined. The prevention and/or minimization of turbulent flows or backflows allows for an improvement in fining because emanating bubbles from the glass melt during the fining process can rise slowly and steadily without being mixed (back) into the glass melt. Additionally, it has been found by simulations that the glass melt volume vertically above the barrier element (313) is small enough in height so that small gas bubbles created through fining can efficiently leave the glass melt.

In one embodiment, the barrier element (313) has a length l_{w} of 30 to 70 cm, or 40 to 60 cm, or 45 to 55 cm, or 4 to 10 cm or 6 to 8 cm. In one embodiment, the barrier element (313) has a width w_{w} of 0.2 to 4.0 m, or 0.2 to 3.5 m, or 0.2 to 3.0 m, or 0.3 to 2.5 m, or 0.4 to 2.0 m, or 0.5 to 1.5 m, or 0.6 to 1.0 m. In one embodiment, the width w_{w} is 0.2 m or more, or 0.3 m or more, or 0.4 m or more, or 0.5 m or more, or 0.6 m or more. In one embodiment, the width w_{w} is 4.0 m or less, or 3.5 m or less, or 3.0 m or less, or 2.5 m or less, or 2.0 m or less, or 1.5 m or less, or 1.0 m or less. In one embodiment, the barrier element (313) has a height h_{w} of 30 to 55 cm, or 35 to 50 cm, or 40 to 45 cm.

In one embodiment, the barrier element (313) has a length l_{w} of 30 to 70 cm, and a height h_{w} of 30 to 50 cm. In one embodiment, the barrier element (313) has a length l_{w} of 45 to 55 cm, and a height h_{w} of 30 to 50 cm. In one embodiment, the barrier element (313) has a length l_{w} of 45 to 55 cm, and a height h_{w} of 30 to 45 cm. In one embodiment, the barrier element (313) has a length l_{w} of 30 to 70 cm, and a height h_{w} of 30 to 55 cm. In one embodiment, the barrier element (313) has a length l_{w} of 45 to 55 cm, and a height h_{w} of 30 to 55 cm. In one embodiment, the barrier element (313) has a length l_{w} of 45 to 55 cm, and a height h_{w} of 30 to 55 cm.

In one embodiment, the barrier element (313) has a length l_{w} of 4 to 10 cm or 6 to 8 cm, and a height h_{w} of 30 to 50 cm, wherein the barrier element (313) comprises or consists of platinum, molybdenum or iridium or alloys thereof. In one embodiment, the barrier element (313) has a length l_{w} of 4 to 10 cm or 6 to 8 cm, and a height h_{w} of 30 to 50 cm, wherein the barrier element (313) comprises a ceramic material which is covered with or shielded with platinum, molybdenum or iridium or alloys thereof.

The optional barrier element (313) can be arranged in different sections within the middle part (311). As described here before the middle part (311) has a length lₘ, which can be normalized to 0.0 to 1.0, with the understanding that the beginning, i.e., the point 0.0 is at the interface to the upstream part (309), and that the point 1.0 is at the interface to the downstream part (310).

Optionally the barrier element (313) is arranged in a section of the middle part (311) which belongs to a region between 0.8 and 1.0 lₘ along the length of the middle part (311), which has been found particularly advantageous because the barrier element provides a hindrance to the refined glass melt just before it flows over said barrier element and enters the downstream part (310) for further processing steps. This arrangement thus allows a steady fining process wherein bubbles can continuously rise to the surface of the glass melt and leave the glass melt without interfering flows. Said arrangement also provides that the emanating bubbles in the refined glass melt are given sufficient time to grow before they are forced out of the melt by virtue of the barrier element. Additionally, said arrangement allows cooling the glass as part of the method of this disclosure which is beneficial for the subsequent and final manufacturing steps of the glass melt and the glass.

In one embodiment, the barrier element (313) is arranged in a section of the middle part (311) which belongs to a region between 0.0 and 0.8 lₘ along the length of the middle part (311). In one embodiment, the barrier element (313) is arranged in a section of the middle part (311) which belongs to a region between 0.0 and 0.2 lₘ along the length of the middle part (311). The inventors have established that irrespective of the exact location of the barrier element within the middle part, the barrier element creates a hindrance within the glass flow of the fining vessel which thereby avoids turbulent flows or backflows which is beneficial for the fining process.

In one embodiment of the fining vessel, the barrier element (313) comprises means for air cooling or water cooling. The barrier element is exposed to hot glass melt at refining temperatures which constantly flows over the barrier element and makes it thus vulnerable to corrosion and mechanical degradation. The use of a refractory material minimises the potential corrosion of the barrier element. Means for air cooling or water cooling further provide that mechanical degradation of the barrier element is kept to a minimum.

In one embodiment, the fining vessel (301) comprises a ramp (315) arranged below a section of the middle part (311) which belongs to a region between 0.8 and 1.0 lₘ along the length of the middle part (311), wherein the ramp (315) has a constant slope, and/or wherein the ramp (315) has a height hᵣ of 0.1 to 1.0 m with respect to the highest point of the ramp (315) and the lowest point of the ramp (315). The optional ramp helps establish and further contributes to a steady flow of the glass melt from the middle part into the downstream part which further improves the fining process. The constant slope of the ramp avoids trapping of parts of the glass melt and may also contribute to a laminar flow from the middle part into the downstream part.

In one embodiment, the ramp has a height hᵣ of 0.1 to 1.0 m, or 0.2 to 0.9 m, or 0.3 to 0.8 m, or 0.4 to 0.7 m. In one embodiment, the ramp has a height hᵣ of 0.1 m or more, or 0.2 m or more, or 0.3 m or more, or 0.4 m or more. In one embodiment, the ramp has a height hᵣ of 1.0 m or less, or 0.9 m or less, or 0.8 m or less, or 0.7 m or less.

In one embodiment, the fining vessel (301) further has a superstructure (305), wherein the superstructure (305) covers the fining vessel (301).

In one embodiment, the fining vessel (301) is connected with an upper section from a riser duct (308) for feeding a glass melt into the middle part (311) and/or the fining vessel (301) is connected with a vertical duct (312) with downward flow for purging a refined glass melt from the middle part (311).

In one embodiment of the apparatus comprising the fining vessel (301), a riser duct (308) and a vertical duct (312), the riser duct (308) has a gaseous phase (306') above a surface (307') of a glass melt (302'), and the vertical duct (312) has a gaseous phase (306") above a surface (307") of the glass melt (302"), wherein the surface (307') of the glass melt (302') in the riser duct (308) is 20% or less than the combined surfaces (307, 307', 307") of the glass melt (302, 302', 302") in the middle part (311), the riser duct (308) and the vertical duct (312), or 10% or less. In one embodiment of the apparatus comprising the fining vessel (301), the riser duct (308) and the vertical duct (312), the surface (307") of the glass melt (302") in the vertical duct (312) is 20% or less than the combined surfaces (307, 307', 307") of the glass melt (302, 302', 302") in the middle part (311), the riser duct (308) and the vertical duct (312), or 10% or less. In one embodiment of the apparatus comprising the fining vessel (301), the riser duct (308) and the vertical duct (312), the surface (307) of the glass melt (302) in the middle part (311) is 60% or larger than the combined surfaces (307, 307', 307") of the glass melt (302, 302', 302") in the middle part (311), the riser duct (308) and the vertical duct (312), or 70% or larger, 80% or larger. It is of advantage that the surface of the glass melt (302) in the middle part (311) is larger than the surface (307') of the glass melt (302') in the riser duct (308). The surface (307') of the glass melt (302') in the riser duct (308) allows that gas bubbles larger than 500 µm may readily leave the glass melt. Equally, it is of advantage that the surface of the glass melt (302) in the middle part (311) is larger than the surface (307") of the glass melt (302") in the vertical duct (312). Said dimensional constraints provide for a sufficiently large surface (307) of the glass melt (302) in the middle part (311) from which gas bubbles with a diameter between 50 µm and 500 µm can emanate as a result of the fining process.

In one embodiment of the fining vessel (301), the riser duct (308) and the vertical duct (312), when in use, contribute to refining the glass melt (302', 302"). Whereas the glass melt has been (pre)heated in the riser duct (308), it is preferred to reach temperatures which provide for refining the glass melt (302') in the riser duct. The riser duct (308) does not have favorable spatial dimensions allowing smooth and short escape paths of the bubbles created through fining. It is advantageous to heat the glass melt to refining temperatures already in the riser duct (308) which effects that fining will take place in the fining vessel (301) across the entire middle section (311). Preheating the glass melt to refining temperatures also provides for a uniform temperature distribution within the glass melt once it has entered the middle section which effects homogenous and continuous bubble emanation from the glass melt. Whereas the refined glass melt (302) leaves the middle part (311) of the fining vessel (301) at elevated temperatures, it is preferred that the glass melt (302") temperature drops in the vertical duct (312) to terminate any fining processes. The decrease of the glass melt (302") temperature leads to a reduction of the partial pressure of gas species which result from fining. Gas bubbles smaller than 50 µm which have not left the glass melt (302") at that stage will be dissolved again in the vertical duct (312), so that the final glass melt (302") will be essentially bubble-free and may be fed into further downstream (conditioning) processes.

In one embodiment, the fining vessel (301) does not comprise a heating burner (314).

In one embodiment, the fining vessel (301) further comprises a heating burner (314) arranged above the bottom (304) at a height of at least 0.9 m above the deepest point of the bottom (304), wherein the heating burner (314) can optionally be heated with fuel gas. To reach sufficient temperatures for fining the glass melt (302), effective heating must be ensured which can optionally be effected in the gaseous phase (306).

In one embodiment, the heating burner (314) can be heated with a mixture of hydrogen and oxygen or with natural gas and oxygen or with a blend of natural gas and hydrogen with oxygen, or ammonia and oxygen, or biomethane or biofuel. In one embodiment, the heating burner (314) can be heated with a mixture of hydrogen and air, or with natural gas and air, or with a blend of natural gas and hydrogen with air.

In one embodiment, the heating burner (314) comprises six individual burners, or eight individual burners, or ten individual burners, which may be arranged in such a way to provide uniform heating within the fictitious top layer (318) of the glass melt (302) in the middle part of the fining vessel (301).

In one embodiment relating to the apparatus comprising the fining vessel (301) and the riser duct (308), the apparatus comprises a heating burner (314), wherein the heating burner (314) comprises six individual burners, or eight individual burners, or ten individual burners, or twelve individual burners, wherein the individual burners are arranged in such a way that their areal density is higher above the riser duct (308) than above the middle part (311) of the fining vessel (301). The heating burner (314) comprising the individual burners is thus arranged in such a way to provide sufficient heating energy in the area above the riser duct (309) to support the rise of the temperature in the glass melt (302', 302) in preparation of fining. In one embodiment, the fining vessel (301) comprises between 0.4 and 4.0 individual burners per square meter, or 0.7 and 3.5 individual burners per square meter, or 1.0 and 3.0 individual burners per square meter, or 1.5 and 2.5 individual burners per square meter, wherein the density of individual burners per square meter is calculated as the absolute number of individual burners divided by the area A = lₘ × wₘ. In one embodiment, the fining vessel (301) comprises at least 0.4 individual burners per square meter, or at least 0.7 individual burners per square meter, or at least 1.0 individual burners per square meter, or at least 1.5 individual burners per square meter. In one embodiment, the fining vessel (301) comprises 4.0 or less individual burners per square meter, or 3.5 or less individual burners per square meter, or 3.0 or less individual burners per square meter, or 2.5 or less individual burners per square meter.

In one embodiment, the fining vessel (301) further comprises two or more heating circuits (316) each comprising at least one pair of electrodes (317). To reach sufficient temperatures for fining the glass melt (302), effective heating must be ensured which can optionally be created from within the glass melt by means of heating circuits (316). In one embodiment, one or more or all electrodes are rod-shaped, tube-shaped, block-shaped and/or plate-shaped.

In one embodiment, the electrodes are arranged in a vertical or a horizontal or an oblique orientation in or on the side walls (303) or arranged in a horizontal or a vertical or an oblique orientation in or on the bottom (304).

In one embodiment, the fining vessel (301) comprises four heating circuits (316) each comprising at least one pair of electrodes (317). In another embodiment, the fining vessel (301) comprises five or more heating circuits (316) each comprising at least one pair of electrodes (317).

The heating circuits (316) may be arranged in such a way to provide uniform heating of the glass melt (302) in the middle part of the fining vessel (311). Advantageously, the two or more heating circuits (316) are arranged in a parallel manner in the middle part of the fining vessel having equal distance between the first heating circuit and the second heating circuit and the second heating circuit and, if present, the third heating circuit, and so forth.

### Glass composition

The viscosity behavior of the glass composition used in the method may be of relevance. As mentioned above, the temperature dependence of glass melt viscosity may be described using the VFT equation. Optionally, the glass melt has a VFT constant B in the range of from 5,000 K to 9,000 K and/or t₀ in the range of from 75 °C to 240 °C. Optionally, VFT constant A is from -5.0 to 0.0. In an embodiment, A is -1,0 or less, such as -4.0 to -1.0. In embodiments, VFT constant B is from 5,000 K to 9,000 K, such as from 4,500 K to 8,500 K. Optionally, t₀ may be at least 75 °C and up to 240 °C; t₀ may be at least 200 °C.

The glass composition may be borosilicate, alumino-borosilicate or aluminosilicate glass. The glass composition may contain alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1% by weight.

The glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight.

The glass composition may contain SiO₂ in an amount of at least 48 % by weight, at least 55 % by weight, at least 65 % by weight, at least 70 % by weight or at least 75 % by weight. Optionally, the amount of SiO₂ may range up to 85 % by weight, up to 82.5 % by weight or up to 80 % by weight.

Optionally, the glass composition may be that of a glass ceramic, i.e., a glass composition that can be further processed into a glass ceramic by appropriate heat treatment. In case that the glass composition is that of a glass ceramic, the composition may contain nucleating agents such as TiO₂ and/or ZrO₂. Optionally, the total amount of TiO₂ and/or ZrO₂ may be at least 2.0 % by weight, such as at least 2.5 % by weight. The glass composition may for example be a lithium aluminosilicate glass composition, e.g., containing at least 2.0 % by weight of Li₂O.

### Description of the Figures

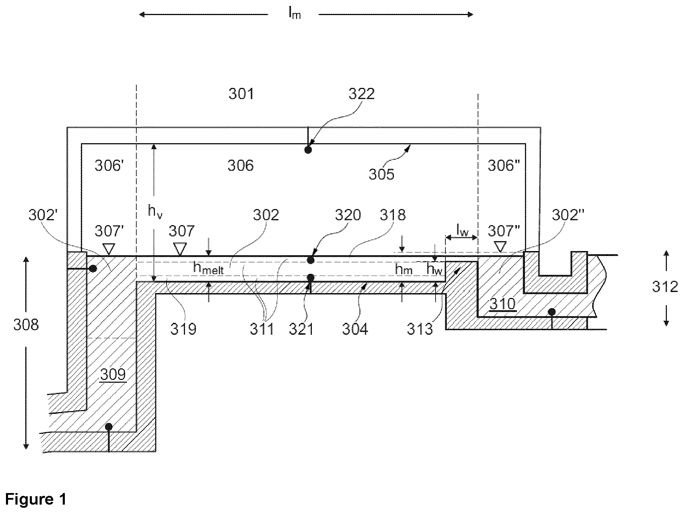

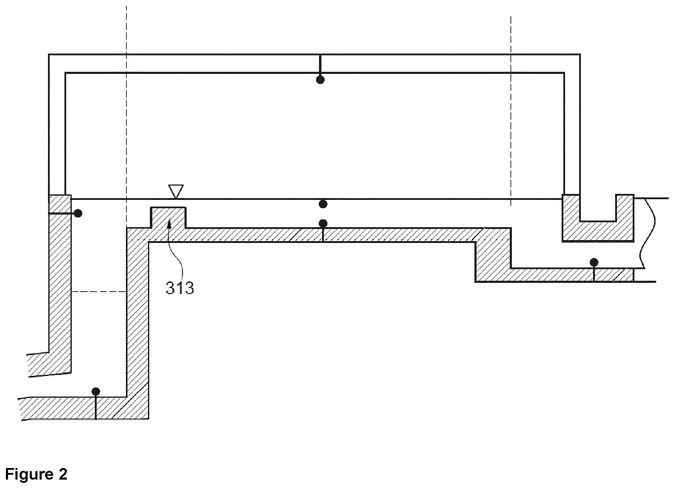

**Figure** 1 shows a longitudinal section of an apparatus comprising a fining vessel (301) with a middle part (311), a riser duct (308) with an upstream part (309) and a vertical duct (312) with a downstream part (310), wherein the fining vessel (301) comprises a barrier element (313) arranged on the bottom (304) of the middle part (311) located adjacent to the downstream part (310). The fining vessel (301) is suitable for refining a glass melt (302). The fining vessel has side walls (not indicated), a bottom (304), and a superstructure (305) covering the apparatus. The apparatus has an upstream part (309) for receiving the glass melt (302, 302') from a riser duct (308), and a downstream part (310) for purging a refined glass melt into a vertical duct (312) with downward flow. The apparatus is functionally divided into a middle part (311) arranged between the upstream part (309) and the downstream part (310). A gaseous phase (306) is provided above a surface (307) of the glass melt (302) filling the middle part (311). A gaseous phase (306') is above a surface (307') of a glass melt (302') in the upper section of the riser duct (308). The middle part (311) has a working height hₘₑₗₜ of the glass melt (302) filling the middle part (311), a length lₘ, a width wₘ (not indicated) and a height hₘ. The fining vessel (301) comprises a barrier element (313) arranged on the bottom (304). The barrier element (313) has a length l_{w}, a width w_{w} (not indicated) and a height h_{w}.
   For sake of clarity and simplicity, Figures 2, 3 and 4 only indicate the difference(s) with respect to the apparatus according to Figure 1. All elements shown in Figure 1 are thus also present in Figures 2, 3 and 4.
**Figure 2** shows a longitudinal section of an apparatus wherein the fining vessel (301) comprises a barrier element (313) arranged on the bottom (304) of the middle part (311) which is located near the upstream part (309).

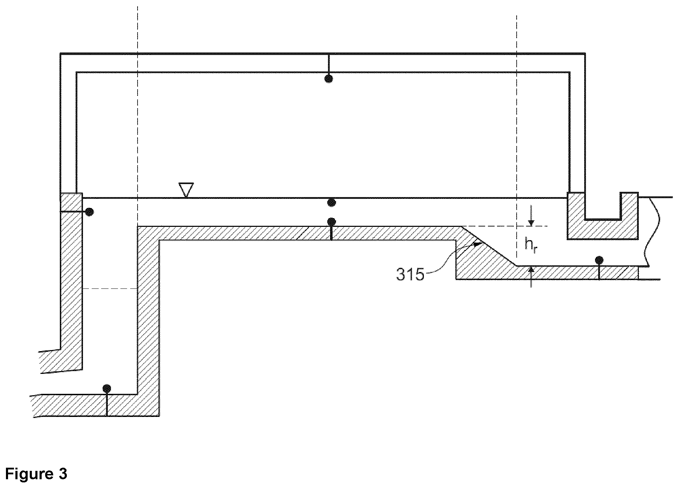

**Figure 3** shows a longitudinal section of an apparatus wherein the fining vessel (301) comprises a ramp (315) which is located below the middle part (311) and before the downstream part (310).

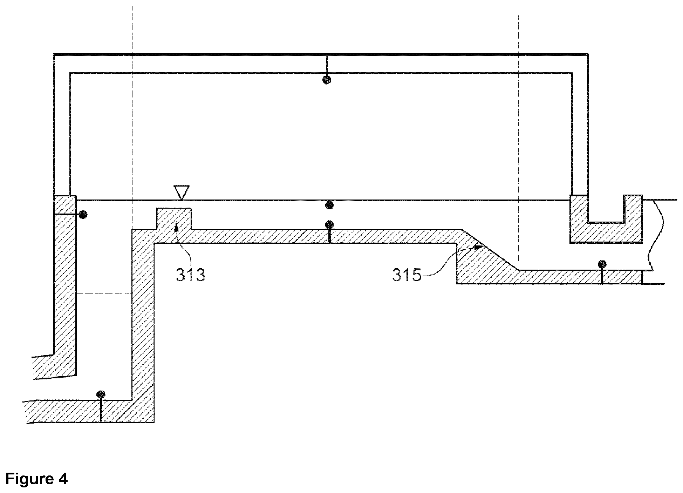

**Figure 4** shows a longitudinal section of an apparatus wherein the fining vessel (301) comprises a barrier element (313) arranged on the bottom (304) of the middle part (311) which is located near the upstream part (309), wherein the fining vessel (301) comprises a ramp (315) which is located below the middle part (311) and before the downstream part (310).

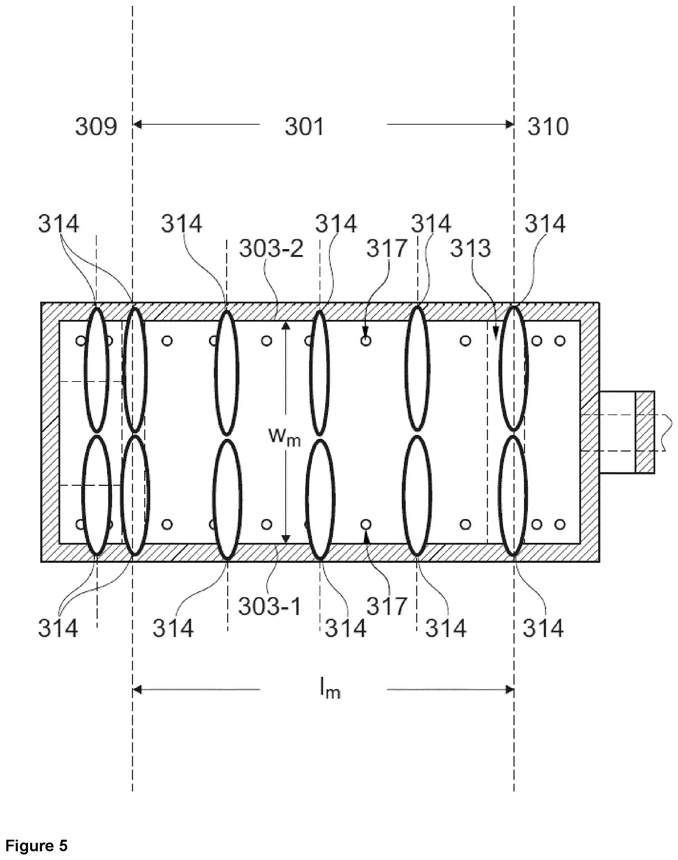

**Figure 5** shows a top view of an apparatus wherein the apparatus is equipped with a heating burner (314) arranged within the gaseous phase (306, 306', 306"). The heating burner (314) comprises twelve individual burners. The apparatus comprises electrodes, of which a pair of electrodes (317) is indicated. A first side wall (303-1) and a second side wall (303-2) are indicated. A barrier element (313) is indicated.

### Examples

Simulations were carried out to assess the refining efficiency of the fining vessel in the presence of a barrier element, arranged either in the front part or the back part of the fining vessel, in the absence of a barrier element and a ramp, and in the presence of a barrier element arranged in the front part combined with a ramp. In line with the definitions of this disclosure, the following dimensions were modelled in the simulations: a width wₘ of 3.6 m; a length lₘ of 6.0 m; a length of 8.0 m including the upstream part, i.e., the riser duct, and the downstream part, i.e., the vertical duct; a working height hₘₑₗₜ of the glass melt of 0.4 m; a total free surface of the glass melt of 28.8 m²; and a height of the barrier element h_{w} (if present) of 0.30 m. Smaller bubbles with a diameter of 500 µm or less were removed to a large extent from the glass melt in the fining vessel, i.e., the middle part. The simulation modelled physical refining effects and neglects any chemical processes which may take place.

The removal of smaller bubbles with a diameter of 500 µm was more efficient in the presence of a barrier element, because above the barrier element the glass melt is narrowed to a short height which allows optimal escape of smaller bubbles due to their vicinity to the glass melt surface.

The minimum dwell time was found to be a relevant parameter when assessing the efficiency of the fining for a given fining vessel design at a constant melt throughput. A longer minimum dwell time provides for a better and more thorough refining because a larger part of the generated gas bubbles is given a chance to grow and to leave the melt. Kinetic processes determine the growth of the bubbles. A sufficient size of the grown bubbles is required to leave the melt within a certain time. Stated differently, the glass melt portion with the shortest minimum dwell time determines the quality of fining and hence the quality of the final glass (product).

| **Arrangement** | **Minimum dwell time, at a glass melt throughput of 42 t/d** |
|---|---|
| (1) barrier element between 11/12 and 1.0 lₘ along the length lₘ | 11.5 h |
| (2) no barrier element and no ramp | 10.2 h |
| (3) barrier element between 0.0 and 1/12 lₘ along the length lₘ | 6.5 h |
| (4) barrier element between 0.0 and 1/12 lₘ along the length lₘ and a ramp | 5.5 h |

Arrangement (1) has thus proven superior because the glass melt has the largest minimum dwell time and is thus retained longest in the fining vessel thus giving a large proportion of grown gas bubbles the chance to leave the glass melt. The arrangements (3) and (4) provide that gas bubbles leave the glass melt in the front part of the fining vessel provided that they are already large enough and near to the glass melt surface.

### Reference numerals

- 301: fining vessel
- 302, 302', 302": glass melt
- 303: side walls
- 303-1: first side wall
- 303-2: second side wall
- 304: bottom
- 305: superstructure
- 306, 306', 306": gaseous phase
- 307, 307', 307": surface of the glass melt
- 308: riser duct
- 309: upstream part
- 310: downstream part
- 311: middle part
- 312: vertical duct
- 313: barrier element
- 314: heating burner
- 315: ramp
- 316: heating circuits
- 317: pair of electrodes
- 318: fictitious top layer
- 319: fictitious bottom layer
- 320: top temperature probes
- 321: bottom temperature probes
- 322: temperature probe arranged in the inner volume of the superstructure

## Claims

1. Method for refining a glass melt, comprising the steps of
- providing a glass melt (302),
- feeding the glass melt (302) into a fining vessel (301), and
- obtaining a refined glass melt,
wherein the fining vessel (301) has a first side wall (303-1), a second side wall (303-2), a bottom (304) and an optional ramp (315), the fining vessel (301) having a middle part (311),
wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), a part above the optional ramp (315) and the optional downstream part (310) are arrangeable in this consecutive order,
wherein the middle part (311) has a width wₘ, wherein the width wₘ is the shortest distance between the first side wall (303-1) and the second side wall (303-2) at a height of 30 cm above a deepest point of the bottom (304),
wherein the fining vessel (301) comprises a barrier element (313) arranged on the bottom (304), wherein the barrier element (313) extends from the first side wall to the second side wall and has a height h_{w}, wherein the height h_{w} refers to the vertical distance between the deepest point of the bottom (304) and the highest height of the barrier element (313), wherein h_{w} ≥ 30 cm,
wherein the glass melt (302) in the fining vessel (301) has a working height hₘₑₗₜ of at least 0.35 m, wherein hₘₑₗₜ is at most 0.6 m.

2. Method according to claim 1, further comprising the step of
- heating the glass melt by means of a heating burner (314) arranged within a gaseous phase (306), wherein the heating burner (314) can optionally be heated with fuel gas and oxygen, or fuel gas and air, or a mixture of hydrogen and oxygen, or with natural gas and oxygen, or with a mixture of natural gas, hydrogen and oxygen, or ammonia and oxygen, or biomethane, or biofuel.

3. Method according to claim 1 or claim 2, further comprising the step of
- heating the glass melt (302) by means of two or more heating circuits (316) each comprising at least one pair of electrodes (317),
wherein one or more or all electrodes are
- rod-shaped and/or plate-shaped, and/or block-shaped and/or tube-shaped, and
- arranged in a vertical or a horizontal or an oblique orientation in or on the side walls (303) or arranged in a horizontal or a vertical or an oblique orientation in or on the bottom (304).

4. Method according to any one of claims 1 to 3, wherein one or more of the following conditions apply:
- hₘₑₗₜ > h_{w} + 0.05 m, or hₘₑₗₜ > h_{w} + 0.10 m, or hₘₑₗₜ > h_{w} + 0.15 m,
- the glass melt (302) has a minimum dwell time of at least 2.5 hours, or at least 3.0 hours, or at least 3.5 hours in the middle part (311),
- the glass melt (302) has an average dwell time of at least 6.0 hours, or at least 8.0 hours, or at least 10.0 hours in the middle part (311),
- a ratio between a glass throughput and an area A in the middle part (311) is at least 1.5 t/(d·m²), or at least 2.0 t/(d·m²), or at least 2.3 t/(d·m²), or at least 2.6 t/(d·m²), wherein A = lₘ × wₘ,
- a ratio between a glass throughput and a middle part volume V in the middle part (311) is at least 1.0 d⁻¹, or at least 2.0 d⁻¹, or at least 4.0 d⁻¹.

5. Method according to any one of claims 1 to 4, wherein the glass melt (302) in the middle part (311) is heated at least partially to a temperature of at least T2 which corresponds to a viscosity of the glass melt (302) of 10² dPa·s.

6. Method according to claim 5, wherein at least 60%, or at least 70%, or at least 80%, of a volume of the glass melt (302) in the middle part (311) is heated to a temperature of at least T2.

7. Method according to any one of claims 1 to 6, wherein the glass melt (302) has a fictitious top layer (318) and a fictitious bottom layer (319), wherein the fictitious top layer (318) consists of a portion of the glass melt (302) in a middle part volume which extends from a surface of the glass melt (307) into the glass melt (302) with a thickness of 10 cm, wherein the fictitious bottom layer (319) consists of a portion of the glass melt (302) in a middle part volume which extends from the bottom (304) into the glass melt (302) with a thickness of 10 cm, wherein the middle part volume is the volume of the glass melt (302) which is required to fill the middle part (311) up to the working height hₘₑₗₜ,
wherein an average temperature of the glass melt in the fictitious top layer (318) is at least 10 K higher, or at least 30 K higher, or at least 50 K higher, than an average temperature of the glass melt in the fictitious bottom layer (319).

8. A fining vessel (301) for refining a glass melt (302), the fining vessel having a first side wall (303-1), a second side wall (303-2), a bottom (304) and an optional ramp (315), the fining vessel (301) having a middle part (311),
wherein the fining vessel (301) is connectable to an optional upstream part (309) for receiving the glass melt (302'), and wherein the fining vessel (301) is connectable to an optional downstream part (310) for purging a refined glass melt, wherein the optional upstream part (309), the middle part (311), a part above the optional ramp (315) and the optional downstream part (310) are arrangeable in this consecutive order,
wherein the middle part (311) has a width wₘ, wherein the width wₘ is the shortest distance between the first side wall (303-1) and the second side wall (303-2) at a height of 30 cm above a deepest point of the bottom (304),
wherein the fining vessel (301) comprises a barrier element (313) arranged on the bottom (304), wherein the barrier element (313) extends from the first side wall to the second side wall and has a height h_{w}, wherein the height h_{w} refers to the vertical distance between the deepest point of the bottom (304) and the highest height of the barrier element (313), wherein h_{w} ≥ 30 cm.

9. Fining vessel (301) according to claim 8, wherein the middle part (311) has a height hₘ,
wherein hₘ is at most 0.63 m, wherein the height hₘ refers to the vertical distance between a deepest point of the bottom (304) and the lowest height of the first side wall (303-1) or the second side wall (303-2).

10. Fining vessel (301) according to claim 8 or claim 9, wherein the middle part has a length lₘ which extends in horizontal and orthogonal direction with respect to the width wₘ, wherein the length lₘ extends from the upstream part to the downstream part,
wherein the barrier element (313) is arranged in a section of the middle part (311) which belongs to a region between 0.8 and 1.0 lₘ along the length lₘ of the middle part (311), or wherein the barrier element (313) is arranged in a section of the middle part (311) which belongs to a region between 0.0 and 0.2 lₘ along the length lₘ of the middle part (311).

11. Fining vessel (301) according to any of claims 8 to 10, further comprising a ramp (315), wherein the ramp (315) has a height hᵣ of 0.1 to 1.0 m with respect to the highest point of the ramp (315) and the lowest point of the ramp (315).

12. Fining vessel (301) according to any one of claims 8 to 11, further having a superstructure (305), wherein the superstructure (305) covers the fining vessel (301).

13. Fining vessel (301) according to any one of claims 8 to 12, wherein the bottom (304) and/or the first side wall (303-1) and the second side wall (303-2) comprise or consist of a refractory material, wherein the refractory material may be a ceramic material, and/or
wherein the barrier element (313) comprises or consists of platinum, molybdenum or iridium or alloys thereof, or wherein the barrier element (313) comprises a ceramic material which is optionally covered with or shielded with platinum, molybdenum or iridium or alloys thereof.

14. Fining vessel (301) according to any one of claims 8 to 13, further comprising a heating burner (314) arranged above the bottom (304) at a height of at least 0.9 m above a deepest point of the bottom (304), wherein the heating burner (314) can optionally be heated with fuel gas.

15. Fining vessel (301) according to any one of claims 8 to 14, further comprising two or more heating circuits (316) each comprising at least one pair of electrodes (317).

16. Fining vessel (301) according to claim 15, wherein one or more or all electrodes are
- rod-shaped and/or plate-shaped, and/or block-shaped and/or tube-shaped, and
- arranged in a vertical or a horizontal or an oblique orientation in or on the side walls (303) or arranged in a horizontal or a vertical or an oblique orientation in or on the bottom (304).

## Patentansprüche

1. Verfahren zum Läutern einer Glasschmelze, aufweisend die Schritte:
Bereitstellen einer Glasschmelze (302);
Einleiten der Glasschmelze (302) in ein Läutergefäß (301); und
Erhalten einer geläuterten Glasschmelze,
wobei das Läutergefäß (301) eine erste Seitenwand (303-1), eine zweite Seitenwand (303-2), einen Boden (304) und eine optionale Rampe (315) aufweist, wobei das Läutergefäß (301) einen Mittelteil (311) aufweist,
wobei das Läutergefäß (301) mit einem optionalen stromaufwärtsseitigen Teil (309) zum Empfangen der Glasschmelze (302') verbindbar ist, und wobei das Läutergefäß (301) mit einem optionalen stromabwärtsseitigen Teil (310) zum Abführen einer geläuterten Glasschmelze verbindbar ist, wobei der optionale stromaufwärtsseitige Teil (309), der Mittelteil (311), ein Teil oberhalb der optionalen Rampe (315) und der optionale stromabwärtsseitige Teil (310) in dieser Reihenfolge angeordnet sein können,
wobei der Mittelteil (311) eine Breite wₘ aufweist, wobei die Breite wₘ der kürzeste Abstand zwischen der ersten Seitenwand (303-1) und der zweiten Seitenwand (303-2) in einer Höhe von 30 cm über dem tiefsten Punkt des Bodens (304) ist,
wobei das Läutergefäß (301) ein auf dem Boden (304) angeordnetes Barrierenelement (313) aufweist, wobei sich das Barrierenelement (313) von der ersten Seitenwand zur zweiten Seitenwand erstreckt und eine Höhe h_{w} aufweist, wobei sich die Höhe h_{w} auf den vertikalen Abstand zwischen dem tiefsten Punkt des Bodens (304) und der höchsten Höhe des Barrierenelements (313) bezieht, wobei h_{w} ≥ 30 cm beträgt,
wobei die Glasschmelze (302) im Läutergefäß (301) eine Arbeitshöhe hₘₑₗₜ von mindestens 0,35 m aufweist, wobei hₘₑₗₜ höchstens 0,6 m beträgt.

2. Verfahren nach Anspruch 1, ferner aufweisend den Schritt zum Erwärmen der Glasschmelze mittels eines innerhalb einer Gasphase (306) angeordneten Heizbrenners (314), wobei der Heizbrenner (314) wahlweise mit Brenngas und Sauerstoff, oder mit Brenngas und Luft, oder mit einem Gemisch aus Wasserstoff und Sauerstoff, oder mit Erdgas und Sauerstoff, oder mit einem Gemisch aus Erdgas, Wasserstoff und Sauerstoff oder Ammoniak und Sauerstoff oder Biomethan oder Biokraftstoff geheizt werden kann.

3. Verfahren nach Anspruch 1 oder 2, ferner aufweisend den Schritt zum Erwärmen der Glasschmelze (302) durch zwei oder mehr Heizkreise (316), die jeweils mindestens ein Elektrodenpaar (317) aufweisen,
wobei eine oder mehrere oder alle Elektroden
stabförmig und/oder plattenförmig und/oder blockförmig und/oder rohrförmig sind, und
in einer vertikalen, horizontalen oder schrägen Ausrichtung in oder auf den Seitenwänden (303) oder in einer horizontalen, vertikalen oder schrägen Ausrichtung im oder auf dem Boden (304) angeordnet sind.

4. Verfahren nach einem der Ansprüche 1 bis 3, wobei eine oder mehrere der folgenden Bedingungen zutreffen:
hₘₑₗₜ > h_{w} + 0,05 m oder hₘₑₗₜ > h_{w} + 0,10 m oder hₘₑₗₜ > h_{w} + 0,15 m,
die Glasschmelze (302) hat im Mittelteil (311) eine Mindestverweildauer von mindestens 2,5 Stunden oder mindestens 3,0 Stunden oder mindestens 3,5 Stunden,
die Glasschmelze (302) hat im Mittelteil (311) eine durchschnittliche Verweildauer von mindestens 6,0 Stunden oder mindestens 8,0 Stunden oder mindestens 10,0 Stunden,
das Verhältnis zwischen einem Glasdurchsatz und einer Fläche A im Mittelteil (311) beträgt mindestens 1,5 t/(d·m²) oder mindestens 2,0 t/(d·m²) oder mindestens 2,3 t/(d·m²) oder mindestens 2,6 t/(d·m²), wobei A = lₘ x wₘ ist,
das Verhältnis zwischen einem Glasdurchsatz und einem Volumen V im Mittelteil (311) beträgt mindestens 1,0 d⁻¹ oder mindestens 2,0 d⁻¹ oder mindestens 4,0 d⁻¹.

5. Verfahren nach einem der Ansprüche 1 bis 4, wobei die Glasschmelze (302) im Mittelteil (311) zumindest teilweise auf eine Temperatur von mindestens T2 erwärmt wird, was einer Viskosität der Glasschmelze (302) von 10² dPa·s entspricht.

6. Verfahren nach Anspruch 5, wobei mindestens 60% oder mindestens 70% oder mindestens 80% eines Volumens der Glasschmelze (302) im Mittelteil (311) auf eine Temperatur von mindestens T2 erwärmt werden.

7. Verfahren nach einem der Ansprüche 1 bis 6, wobei die Glasschmelze (302) eine fiktive obere Schicht (318) und eine fiktive untere Schicht (319) aufweist, wobei die fiktive obere Schicht (318) aus einem Teil der Glasschmelze (302) in einem Mittelteilvolumen besteht, das sich von einer Oberfläche der Glasschmelze (307) in die Glasschmelze (302) hinein mit einer Dicke von 10 cm erstreckt, wobei die fiktive untere Schicht (319) aus einem Teil der Glasschmelze (302) in einem Mittelteilvolumen besteht, das sich vom Boden (304) in die Glasschmelze (302) hinein mit einer Dicke von 10 cm erstreckt, wobei das Mittelteilvolumen das Volumen der Glasschmelze (302) ist, das erforderlich ist, um den Mittelteil (311) bis zur Arbeitshöhe hₘₑₗₜ zu füllen,
wobei eine Durchschnittstemperatur der Glasschmelze in der fiktiven oberen Schicht (318) mindestens 10 K höher oder mindestens 30 K höher oder mindestens 50 K höher ist als eine Durchschnittstemperatur der Glasschmelze in der fiktiven unteren Schicht (319).

8. Läutergefäß (301) zum Läutern einer Glasschmelze (302), wobei das Läutergefäß eine erste Seitenwand (303-1), eine zweite Seitenwand (303-2), einen Boden (304) und eine optionale Rampe (315) aufweist, wobei das Läutergefäß (301) einen Mittelteil (311) aufweist,
wobei das Läutergefäß (301) mit einem optionalen stromaufwärtsseitigen Teil (309) zum Empfangen der Glasschmelze (302') verbindbar ist, und wobei das Läutergefäß (301) mit einem optionalen stromabwärtsseitigen Teil (310) zum Abführen einer geläuterten Glasschmelze verbindbar ist, wobei der optionale stromaufwärtsseitige Teil (309), der Mittelteil (311), ein Teil oberhalb der optionalen Rampe (315) und der optionale stromabwärtsseitige Teil (310) in dieser Reihenfolge angeordnet sein können,
wobei der Mittelteil (311) eine Breite wₘ aufweist, wobei die Breite wₘ der kürzeste Abstand zwischen der ersten Seitenwand (303-1) und der zweiten Seitenwand (303-2) in einer Höhe von 30 cm über dem tiefsten Punkt des Bodens (304) ist,
wobei das Läutergefäß (301) ein auf dem Boden (304) angeordnetes Barrierenelement (313) aufweist, wobei sich das Barrierenelement (313) von der ersten Seitenwand zur zweiten Seitenwand erstreckt und eine Höhe h_{w} aufweist, wobei sich die Höhe h_{w} auf den vertikalen Abstand zwischen dem tiefsten Punkt des Bodens (304) und der höchsten Höhe des Barrierenelements (313) bezieht, wobei h_{w} ≥ 30 cm beträgt.

9. Läutergefäß (301) nach Anspruch 8, wobei der Mittelteil (311) eine Höhe hₘ aufweist, wobei hₘ höchstens 0,63 m beträgt, wobei sich die Höhe hₘ auf den vertikalen Abstand zwischen einem tiefsten Punkt des Bodens (304) und der niedrigsten Höhe der ersten Seitenwand (303-1) oder der zweiten Seitenwand (303-2) bezieht.

10. Läutergefäß (301) nach Anspruch 8 oder 9, wobei der Mittelteil eine Länge lₘ aufweist, die sich in der horizontalen und in der orthogonalen Richtung in Bezug auf die Breite wₘ erstreckt, wobei sich die Länge lₘ vom stromaufwärtsseitigen Teil zum stromabwärtsseitigen Teil erstreckt,
wobei das Barrierenelement (313) in einem Abschnitt des Mittelteils (311) angeordnet ist, der einem Bereich zwischen 0,8 und 1,0 lₘ entlang der Länge lₘ des Mittelteils (311) zugehörig ist, oder
wobei das Barrierenelement (313) in einem Abschnitt des Mittelteils (311) angeordnet ist, der einem Bereich zwischen 0,0 und 0,2 lₘ entlang der Länge lₘ des Mittelteils (311) zugehörig ist.

11. Läutergefäß (301) nach einem der Ansprüche 8 bis 10, ferner aufweisend eine Rampe (315), wobei die Rampe (315) eine Höhe hᵣ von 0,1 bis 1,0 m zwischen dem höchsten Punkt der Rampe (315) und dem tiefsten Punkt der Rampe (315) aufweist.

12. Läutergefäß (301) nach einem der Ansprüche 8 bis 11, ferner aufweisend einen Überbau (305), wobei der Überbau (305) das Läutergefäß (301) abdeckt.

13. Läutergefäß (301) nach einem der Ansprüche 8 bis 12, wobei der Boden (304) und/oder die erste Seitenwand (303-1) und die zweite Seitenwand (303-2) ein feuerfestes Material aufweisen oder daraus bestehen, wobei das feuerfeste Material ein keramisches Material sein kann, und/oder
wobei das Barrierenelement (313) Platin, Molybdän oder Iridium oder Legierungen davon aufweist oder daraus besteht, oder wobei das Barrierenelement (313) ein keramisches Material aufweist, das optional mit Platin, Molybdän oder Iridium oder Legierungen davon beschichtet oder abgeschirmt ist.

14. Läutergefäß (301) nach einem der Ansprüche 8 bis 13, ferner aufweisend einen Heizbrenner (314), der über dem Boden (304) in einer Höhe von mindestens 0,9 m über einem tiefsten Punkt des Bodens (304) angeordnet ist, wobei der Heizbrenner (314) wahlweise mit Brenngas heizbar ist.

15. Läutergefäß (301) nach einem der Ansprüche 8 bis 14, ferner aufweisend zwei oder mehr Heizkreise (316), von denen jeder mindestens ein Elektrodenpaar (317) aufweist.

16. Läutergefäß (301) nach Anspruch 15, wobei eine oder mehrere oder alle Elektroden
stabförmig und/oder plattenförmig und/oder blockförmig und/oder rohrförmig sind, und
in einer vertikalen, horizontalen oder schrägen Ausrichtung in oder auf den Seitenwänden (303) angeordnet sind, oder in einer horizontalen, vertikalen oder schrägen Ausrichtung im oder auf dem Boden (304) angeordnet sind.

## Revendications

1. Procédé d'affinage d'un bain de verre, comprenant les étapes consistant à
- fournir un bain de verre (302),
- introduire le bain de verre (302) dans un récipient d'affinage (301), et
- obtenir un bain de verre affiné,
dans lequel le récipient d'affinage (301) présente une première paroi latérale (303-1), une seconde paroi latérale (303-2), un fond (304) et une rampe facultative (315), le récipient d'affinage (301) ayant une partie médiane (311),
dans lequel le récipient d'affinage (301) est raccordable à une partie amont facultative (309) pour recevoir le bain de verre (302'), et dans lequel le récipient d'affinage (301) est raccordable à une partie aval facultative (310) pour évacuer un bain de verre affiné, dans lequel la partie amont facultative (309), la partie médiane (311), une partie au-dessus de la rampe facultative (315) et la partie aval facultative (310) est agençable dans cet ordre consécutif,
dans lequel la partie médiane (311) a une largeur *Wₘ*, dans lequel la largeur *Wₘ* est la distance la plus courte entre la première paroi latérale (303-1) et la seconde paroi latérale (303-2) à une hauteur de 30 cm au-dessus du point le plus profond du fond (304),
dans lequel le récipient d'affinage (301) comprend un élément barrière (313) agencé sur le fond (304), dans lequel l'élément barrière (313) s'étend de la première paroi latérale à la seconde paroi latérale et a une hauteur *h_{w},* dans lequel la hauteur *h_{w}* désigne la distance verticale entre le point le plus profond du fond (304) et la hauteur maximale de l'élément barrière (313), dans lequel *h_{w}* ≥ 30 cm,
dans lequel le bain de verre (302) dans le récipient d'affinage (301) a une hauteur de travail *hₘₑₗₜ* d'au moins 0,35 m, dans lequel *hₘₑₗₜ* est d'au plus 0,6 m.

2. Procédé selon la revendication 1, comprenant en outre l'étape consistant à
- chauffer le bain de verre au moyen d'un brûleur de chauffage (314) agencé au sein d'une phase gazeuse (306), dans lequel le brûleur de chauffage (314) peut facultativement être chauffé avec un gaz combustible et de l'oxygène, ou un gaz combustible et de l'air, ou un mélange d'hydrogène et d'oxygène, ou avec du gaz naturel et de l'oxygène, ou avec un mélange de gaz naturel, d'hydrogène et d'oxygène, ou de l'ammoniac et de l'oxygène, ou du biométhane, ou un biocarburant.

3. Procédé selon la revendication 1 ou la revendication 2, comprenant en outre l'étape consistant à
- chauffer le bain de verre (302) au moyen de deux circuits de chauffage (316) ou plus, comprenant chacun au moins une paire d'électrodes (317), dans lequel une ou plusieurs ou toutes les électrodes sont
- en forme de tige et/ou en forme de plaque, et/ou en forme de bloc et/ou en forme de tube, et
- agencées selon une orientation verticale ou horizontale ou oblique dans ou sur les parois latérales (303) ou agencées selon une orientation horizontale ou verticale ou oblique dans ou sur le fond (304).

4. Procédé selon l'une quelconque des revendications 1 à 3, dans lequel une ou plusieurs des conditions suivantes s'appliquent :
- *hₘₑₗₜ > h_{w}* + 0,05 m, ou *hₘₑₗₜ > h_{w}* + 0,10 m, ou *hₘₑₗₜ > h_{w}* + 0,15 m,
- le bain de verre (302) a un temps de séjour minimum d'au moins 2,5 heures, ou d'au moins 3,0 heures, ou d'au moins 3,5 heures dans la partie médiane (311),
- le bain de verre (302) a un temps de séjour moyen d'au moins 6,0 heures, ou d'au moins 8,0 heures, ou d'au moins 10,0 heures dans la partie médiane (311),
- un rapport entre un débit de verre et une aire A dans la partie médiane (311) est d'au moins 1,5 *t*/*(d* · *m*²), ou d'au moins 2,0 *t*/(*d* · *m*²), ou d'au moins 2,3 *t*/(*d* · *m*²), ou d'au moins 2,6 *t*/(*d* · *m*²), dans lequel A = *lₘ* × *Wₘ*
- un rapport entre un débit de verre et un volume de partie médiane V dans la partie médiane (311) est d'au moins 1,0 *d*⁻¹, ou d'au moins 2,0 *d*⁻¹, ou d'au moins 4,0 *d*^{*-*1}.

5. Procédé selon l'une quelconque des revendications 1 à 4, dans lequel le bain de verre (302) dans la partie médiane (311) est chauffé au moins partiellement à une température d'au moins T2 qui correspond à une viscosité du bain de verre (302) de 10² dPa.s.

6. Procédé selon la revendication 5, dans lequel au moins 60 %, ou au moins 70 %, ou au moins 80 %, d'un volume du bain de verre (302) dans la partie médiane (311) est chauffé à une température d'au moins T2.

7. Procédé selon l'une quelconque des revendications 1 à 6, dans lequel le bain de verre (302) a une couche supérieure fictive (318) et une couche inférieure fictive (319), dans lequel la couche supérieure fictive (318) est constituée d'une portion du bain de verre (302) dans un volume de partie médiane qui s'étend depuis une surface du bain de verre (307) dans le bain de verre (302) sur une épaisseur de 10 cm, dans lequel la couche inférieure fictive (319) est constituée d'une portion du bain de verre (302) dans un volume de partie médiane qui s'étend depuis le fond (304) dans le bain de verre (302) sur une épaisseur de 10 cm, dans lequel le volume de la partie médiane est le volume du bain de verre (302) qui est requis pour remplir la partie médiane (311) jusqu'à la hauteur de travail *hₘₑₗₜ,*
dans lequel une température moyenne du bain de verre dans la couche supérieure fictive (318) est supérieure d'au moins 10 K, ou supérieure d'au moins 30 K, ou supérieure d'au moins 50 K, à une température moyenne du bain de verre dans la couche inférieure fictive (319).

8. Récipient d'affinage (301) pour l'affinage d'un bain de verre (302), le récipient d'affinage présentant une première paroi latérale (303-1), une seconde paroi latérale (303-2), un fond (304) et une rampe facultative (315), le récipient d'affinage (301) ayant une partie médiane (311),
dans lequel le récipient d'affinage (301) est raccordable à une partie amont facultative (309) pour recevoir le bain de verre (302'), et dans lequel le récipient d'affinage (301) est raccordable à une partie aval facultative (310) pour évacuer un bain de verre affiné, dans lequel la partie amont facultative (309), la partie médiane (311), une partie au-dessus de la rampe facultative (315) et la partie aval facultative (310) sont agençables dans cet ordre consécutif,
dans lequel la partie médiane (311) a une largeur *Wₘ*, dans lequel la largeur *Wₘ* est la distance la plus courte entre la première paroi latérale (303-1) et la seconde paroi latérale (303-2) à une hauteur de 30 cm au-dessus du point le plus profond du fond (304),
dans lequel le récipient d'affinage (301) comprend un élément barrière (313) agencé sur le fond (304), dans lequel l'élément barrière (313) s'étend de la première paroi latérale à la seconde paroi latérale et a une hauteur *h_{w},* dans lequel la hauteur *h_{w}* désigne la distance verticale entre le point le plus profond du fond (304) et la hauteur maximale de l'élément barrière (313), dans lequel *h_{w}* ≥ 30 cm.

9. Récipient d'affinage (301) selon la revendication 8, dans lequel la partie médiane (311) a une hauteur *hₘ* dans lequel *hₘ* est d'au plus 0,63 m, dans lequel la hauteur *hₘ* désigne la distance verticale entre un point le plus profond du fond (304) et la hauteur la plus basse de la première paroi latérale (303-1) ou de la seconde paroi latérale (303-2).

10. Récipient d'affinage (301) selon la revendication 8 ou la revendication 9, dans lequel la partie médiane a une longueur *Iₘ* qui s'étend dans une direction horizontale et orthogonale par rapport à la largeur *wₘ*, dans lequel la longueur *Iₘ* s'étend de la partie amont à la partie aval,
dans lequel l'élément barrière (313) est agencé dans une section de la partie médiane (311) qui appartient à une région comprise entre 0,8 et 1,0 *Iₘ* le long de la longueur *Iₘ* de la partie médiane (311), ou
dans lequel l'élément barrière (313) est agencé dans une section de la partie médiane (311) qui appartient à une région comprise entre 0,0 et 0,2 *Iₘ* le long de la longueur *Iₘ* de la partie médiane (311).

11. Récipient d'affinage (301) selon l'une quelconque des revendications 8 à 10, comprenant en outre une rampe (315), dans lequel la rampe (315) a une hauteur hᵣ de 0,1 à 1,0 m par rapport au point le plus haut de la rampe (315) et au point le plus bas de la rampe (315).

12. Récipient d'affinage (301) selon l'une quelconque des revendications 8 à 11, comportant en outre une superstructure (305), dans lequel la superstructure (305) recouvre le récipient d'affinage (301).

13. Récipient d'affinage (301) selon l'une quelconque des revendications 8 à 12, dans lequel le fond (304) et/ou la première paroi latérale (303-1) et la seconde paroi latérale (303-2) comprennent ou sont constitués d'un matériau réfractaire, dans lequel le matériau réfractaire peut être un matériau céramique, et/ou
dans lequel l'élément barrière (313) comprend ou est constitué de platine, de molybdène ou d'iridium ou d'alliages de ceux-ci, ou dans lequel l'élément barrière (313) comprend un matériau céramique qui est facultativement recouvert ou blindé avec du platine, du molybdène ou de l'iridium ou des alliages de ceux-ci.

14. Récipient d'affinage (301) selon l'une quelconque des revendications 8 à 13, comprenant en outre un brûleur de chauffage (314) agencé au-dessus du fond (304) à une hauteur d'au moins 0,9 m au-dessus d'un point le plus profond du fond (304), dans lequel le brûleur de chauffage (314) peut facultativement être chauffé avec un gaz combustible.

15. Récipient d'affinage (301) selon l'une quelconque des revendications 8 à 14, comprenant en outre deux circuits de chauffage (316) ou plus, comprenant chacun au moins une paire d'électrodes (317).

16. Récipient d'affinage (301) selon la revendication 15, dans lequel une ou plusieurs ou toutes les électrodes sont
- en forme de tige et/ou en forme de plaque, et/ou en forme de bloc et/ou en forme de tube, et
- agencées selon une orientation verticale ou horizontale ou oblique dans ou sur les parois latérales (303) ou agencées selon une orientation horizontale ou verticale ou oblique dans ou sur le fond (304).
